# EUROPÄISCHE PATENTANMELDUNG

(11) **EP 3 680 088 A1**
(43) Veröffentlichungstag der Anmeldung: **15.07.2020**
(21) Anmeldenummer: 19150982.7
(22) Anmeldetag: 09.01.2019
(51) Int. Cl.: B29C 64/106, B29C 44/00, B29C 44/02, B29C 48/56, B33Y 30/00, B33Y 10/00

(54) **VERFAHREN ZUM DREIDIMENSIONALEN AUFBRINGEN EINES AUFGESCHÄUMTEN MATERIALS MITTELS EINER DRUCKVORRICHTUNG SOWIE DRUCKVORRICHTUNG**

(71) Anmelder: Siemens Aktiengesellschaft, 80333 München (DE)
(72) Erfinder: Jähnicke, Jens, 09112 Chemnitz (DE); Kühn, Cornelius, 91052 Erlangen (DE)

(57) **Zusammenfassung**

Die Erfindung betrifft ein Verfahren zum dreidimensionalen Aufbringen eines Materials mittels einer Druckvorrichtung (1), bei welchem das Material in einem Druckkopf (2) geschmolzen wird und das geschmolzene Material (4) aus einer Düse (7) ausgeben wird, wobei das geschmolzene Material (4) bei einer Bewegung des Druckkopfs (2) als Strang auf ein zuvor aufgetragenes Material (5) und/oder ein Substrat (6) aufgebracht wird und aushärtet, wobei dem geschmolzenen Material (4) in dem Druckkopf (2) ein Zusatzstoff (9) hinzugefügt wird, wobei der Zusatzstoff (9) bewirkt, dass sich nach dem Auftragen des geschmolzenen Materials (4) ein Gas in dem geschmolzenen Material (4) ausdehnt und das geschmolzene Material (4) vor dem Aushärten aufgeschäumt wird.

## Beschreibung

Die vorliegende Erfindung betrifft ein Verfahren zum dreidimensionalen Aufbringen eines Materials mittels einer Druckvorrichtung. Hierbei wird das Material in einem Druckkopf geschmolzen und das geschmolzene Material wird aus einer Düse ausgeben, wobei das geschmolzene Material bei einer Bewegung des Druckkopfs als Strang auf ein zuvor aufgetragenes Material und/oder ein Substrat aufgebracht wird und aushärtet. Darüber hinaus betrifft die vorliegende Erfindung eine Druckvorrichtung zum dreidimensionalen Aufbringen eines Materials.

Aus dem Stand der Technik sind zahlreiche additive Fertigungsverfahren oder dreidimensionale Druckverfahren zum Herstellen eines Bauteils bekannt. Vorliegend richtet sich das Interesse insbesondere auf das sogenannte FLM-Verfahren (FLM - fused layer manufacturing/modeling), welches als Strangextrusionsverfahren dadurch charakterisiert ist, dass aufgeschmolzene Kunststoffbahnen aufeinander abgelegt werden. Dieser Schichtaufbau erzwingt einen hohen Füllgrad des Bauteilvolumens, da die neu aufgetragenen Bahnen nur auf bereits abgelegte beziehungsweise erkaltete Bahnen aufgebracht werden können. Obwohl es nicht immer aus mechanischen oder strukturellen Gründen beziehungsweise aus Festigkeits- oder Steifigkeitsgründen eine Notwendigkeit für dieses Füllvolumen gibt, muss es aus prozesstechnischer Sicht existieren. Eine nachträgliche Entfernung dieses Füllvolumens ist nicht immer möglich, vor allem dann nicht, wenn bei dem Bauteil ein Hohlkörper über eine geschlossene Oberfläche verfügt. Außerdem ist die nachträgliche Entfernung dieses Materials sowohl hinsichtlich der Zeit als auch hinsichtlich des Materials aufwendig. Dieses Füllvolumen benötigt im Fertigungsprozess annähernd dieselbe Zeit wie die Abschnitte, die strukturell tragend sind, weshalb die Fertigungszeit und damit auch die Bauteilkosten bedeuten von der Füllstruktur beeinflusst werden.

Um die Bauteildichte auf ein Minimum zu senken, um damit den Ressourcenverbrauch zu minimieren, gleichzeitig aber die Festigkeit und Steifigkeit zu maximieren und strukturell tragende Schichten zu erzeugen, können Schäume eingesetzt werden. Aus dem Stand der Technik sind unterschiedliche Verfahren zum Herstellen von Schäumen bekannt. Beispielsweise ist die Schaumextrusion bekannt, bei welcher beispielsweise einem geschmolzenen Kunststoff ein Treibgas hinzugefügt wird. Des Weiteren sind Formteilprozesse bekannt, bei denen Schaumstoffkügelchen in einer Form gesintert werden. Zudem ist das Thermoplast-Schaumgussverfahren bekannt. Zudem gibt es Schäume aus Polyurethan und expandiertes Polystyrol, welches vor allem unter dem Handelsnamen Styropor® bekannt ist. Darüber hinaus sind aus dem Stand der Technik Materialien bekannt, welche einen elastischen Kunststoff sowie wasserlösliche Bestandteile aufweist. Dieses Material kann mit einem Druckkopf aufgebracht werden. Nach dem Aushärten können die wasserlöslichen Bestandteile herausgelöst werden, sodass ein schaumartiger und elastischer Kunststoff übrig bleibt.

Darüber hinaus ist aus dem Stand der Technik das MuCell®-Verfahren bekannt. Hierbei wird ein Inertgas, beispielsweise Stickstoff, in eine Kunststoffschmelze eingebracht. Dabei wird das Gas fein verteilt und löst sich unter Druck vollständig. Der geschmolzene Kunststoff, in den das Gas eingebracht ist, wird in eine Form eingespritzt. Hierbei expandiert das Gas und es bildet sich eine Schaumstruktur. Nach dem Auskühlen kann das Bauteil aus der Form entnommen werden.

In der additiven Fertigung existieren kaum Ansätze auf diesem Gebiet. Das Problem wird aktuell so gelöst, dass die Bahnen mit variablen Abständen beziehungsweise in einer Gitterstruktur abgelegt werden. Dies bewirkt einen 2,5-dimensionalen Gitter-Schichtaufbau, der jedoch aus mechanisch-struktureller Sicht nicht mit den dreidimensionalen Gebilden eines Volumenbläschens vergleichbar ist. Bei einem geschlossenen-fälligen Schaum stehen die eingeschlossenen Bläschen unter Überdruck und verhelfen dem Bauteil somit zu erhöhter Steifigkeit bei minimaler Masse.

Es ist Aufgabe der vorliegenden Erfindung, eine Lösung aufzuzeigen, wie die Herstellung eines aufgeschäumten Bauteils beziehungsweise eines Schaums vereinfacht werden kann.

Diese Aufgabe wird erfindungsgemäß durch ein Verfahren sowie durch eine Druckvorrichtung mit den Merkmalen gemäß den unabhängigen Ansprüchen gelöst. Vorteilhafte Weiterbildungen der vorliegenden Erfindung sind in den abhängigen Ansprüchen angegeben.

Ein erfindungsgemäßes Verfahren dient zum dreidimensionalen Aufbringen eines Materials mittels einer Druckvorrichtung. Hierbei wird das Material in einem Druckkopf geschmolzen und das geschmolzene Material wird aus einer Düse ausgeben, wobei das geschmolzene Material bei einer Bewegung des Druckkopfs als Strang auf ein zuvor aufgetragenes Material und/oder ein Substrat aufgebracht wird und aushärtet. Darüber hinaus wird dem geschmolzenen Material in dem Druckkopf ein Zusatzstoff hinzugefügt, wobei der Zusatzstoff bewirkt, dass sich nach dem Auftragen des geschmolzenen Materials ein Gas in dem geschmolzenen Material ausdehnt und das geschmolzene Material vor dem Aushärten aufgeschäumt wird.

Bei den Verfahren soll ein aufgeschäumtes Bauteil beziehungsweise ein Schaum mithilfe eines additiven Fertigungsverfahrens hergestellt werden. Das Verfahren kann mit einer Druckvorrichtung durchgeführt werden, bei welcher der Druckkopf entsprechend bewegt wird und das Material mit dem Druckkopf abgegeben wird. Insbesondere kann mit der Druckvorrichtung das sogenannte FLM-Verfahren durchgeführt werden. Dabei wird das Material in einem festen beziehungsweise nicht geschmolzenen Zustand dem Druckkopf zugeführt. Bei dem Material kann es sich insbesondere um ein thermoplastisches Material, beispielsweise einen entsprechenden Kunststoff, handeln. Das Material kann beispielsweise in Form eines Filaments bereitgestellt werden und dem Druckkopf zugeführt werden. Es kann auch vorgesehen sein, dass das Material in Form eines Granulats und/oder eines Pulvers dem Druckkopf zugeführt wird. Der Druckkopf kann eine entsprechende Heizeinrichtung aufweisen, mittels welcher das Material erwärmt und somit geschmolzen werden kann. Innerhalb des Druckkopfs kann das Material gefördert werden, wobei das geschmolzene Material an einer Austrittsöffnung beziehungsweise einer Düse des Druckkopfes austritt. Somit kann mittels des Druckkopfs das geschmolzene Material ausgegeben werden. Hierbei kann der Druckkopf relativ zu dem Substrat bewegt werden. Beispielsweise kann der Druckkopf entlang zweier zueinander senkrechter Raumrichtungen bewegt werden. Es kann auch vorgesehen sein, dass der Druckkopf zusätzlich entlang einer dritten Raumrichtung bewegt wird. Alternativ dazu kann das Substrat beziehungsweise ein höhenverstellbarer Tisch, auf dem das Substrat angeordnet ist, in der dritten Raumrichtung verstellt werden. Dabei kann der Druckkopf entlang einer Verfahrrichtung bewegt werden, welche zuvor für die Herstellung des Bauteils definiert wurde. Hierbei wird das geschmolzene Material als Strang beziehungsweise als Bahn ausgegeben. Ferner werden diese Bahnen in der Aufbaurichtung übereinander angeordnet. Dabei wird das geschmolzene Material üblicherweise auf das zuvor aufgetragene Material beziehungsweise auf eine zuvor aufgetragene Bahn aufgetragen, wobei das zuvor aufgetragene Material zumindest teilweise erstarrt beziehungsweise fest ist.

Gemäß einem wesentlichen Aspekt der vorliegenden Erfindung ist es vorgesehen, dass dem geschmolzenen Material der Zusatzstoff zugeführt wird. Insbesondere wird das geschmolzene Material mit dem Zusatzstoff vermischt. Durch das Hinzufügen des Zusatzstoffs zu dem Material wird bewirkt, dass das Gas in dem geschmolzenen Material gelöst wird. Bei dem Ausgeben des geschmolzenen Materials, in dem das Gas gelöst ist, expandiert das Gas. Das geschmolzene Material, in dem das Gas gelöst ist, wird also mittels des Druckkopfs als Bahn beziehungsweise als Strang aufgetragen. Hierbei befindet sich das Material in dem geschmolzenen Zustand. In diesem geschmolzenen Zustand dehnt sich auch das in dem Material gelöste Gas aus. Nach dem Aushärten beziehungsweise Erstarren des Materials bildet sich somit eine Schaumstruktur aus. Mit andere Worten kann also das geschmolzene Material aufgeschäumt werden. Nach dem Aushärten des Materials stehen die in dem Material eingeschlossenen Gasbläschen unter Überdruck, wodurch eine Erhöhung der Steifigkeit des Materials bei gleichzeitiger Reduzierung des Gewichts erreicht werden kann. Mithilfe des Verfahrens kann somit das aufgeschäumten Material direkt gedruckt werden beziehungsweise es können Bahnen des aufgeschäumten Materials abgegeben werden. Durch dieses Verfahren wird nicht nur Material, sondern auch Zeit und damit Kosten gespart. Das geschäumte Material weist ausreichend strukturelle Integrität auf, um als Basis für strukturelle Bahnen zu bedienen. Das Verfahren lässt sich somit nicht nur beschleunigen, wodurch neue Anwendungen erschlossen werden können, sondern es bewirkt auch eine technische Verbesserung und Optimierung der Bauteile hinsichtlich des Gewichts und/oder der Steifigkeit. Des Weiteren kann im Vergleich zu bekannten Verfahren, insbesondere dem sogenannten MuCell®-Verfahren, der Vorteil erreicht werden, dass keine zusätzlichen Formen für ein Spritzgussverfahren benötigt werden.

In einer Ausführungsform wird dem geschmolzenen Material als der Zusatzstoff das Gas hinzugefügt. Es kann also vorgesehen sein, dass das Gas direkt in das geschmolzene Material eingebracht wird. Der Druckkopf kann ein entsprechendes Gehäuse aufweisen, in welches das Material eingebracht wird. Hierbei ist insbesondere vorgesehen, dass dieses Gehäuse verschlossen ist beziehungsweise verschlossen werden kann. Innerhalb des Gehäuses beziehungsweise des Druckkopfes kann dann das Material geschmolzen werden. In dieses Gehäuse kann dann das Gas eingebracht werden. Zu diesem Zweck kann das Gehäuse eine entsprechende Öffnung aufweisen. Das Gas kann in einem entsprechenden Behälter beziehungsweise Reservoir vorhanden sein, wobei der Behälter fluidisch mit dem Gehäuse beziehungsweise dem Druckkopf verbunden ist. Bei dem Gas kann es sich insbesondere um ein Inertgas, beispielsweise Stickstoff oder dergleichen, handeln. Zudem kann es vorgesehen sein, dass das geschmolzene Material mit dem eingebrachten Gas vermischt wird. Auf diese Weise kann eine gleichmäßige Verteilung des Gases in dem geschmolzenen Material erreicht werden.

Gemäß einer alternativen Ausführungsform wird dem geschmolzenen Material als der Zusatzstoff ein chemisches Treibmittel hinzugefügt, wobei durch das Hinzufügen des chemischen Treibmittels zudem geschmolzenen Material das Gas erzeugt wird. Beispielsweise kann das chemische Treibmittel so ausgebildet sein, dass das Gas durch die Verbindung des geschmolzenen Materials und des Treibmittels gebildet wird. Es kann auch vorgesehen sein, dass das geschmolzene Material zusammen mit dem chemischen Treibmittel mit einem Druck beaufschlagt wird und sich somit das Gas ausbildet. Bei dem chemischen Treibmittel kann es sich um einen organischen oder um einen anorganischen Stoff handeln. Auch somit kann erreicht werden, dass sich das Gas nach dem Aufbringen in dem geschmolzenen Material ausdehnt.

Bevorzugt wird das Material zum Schmelzen mittels einer Heizeinrichtung des Druckkopfs geschmolzen. Wie bereits erläutert, kann der Druckkopf das Gehäuse aufweisen, in welches das Material im festen beziehungsweise nicht geschmolzenen Zustand eingebracht wird. Die Heizeinrichtung kann das Gehäuse zumindest bereichsweise umgeben. Beispielsweise kann das Gehäuse im Wesentlichen hohlzylinderförmig ausgebildet sein. Dabei kann die Heizeinrichtung beispielsweise als Heizmanschette ausgebildet sein. Somit kann eine gleichmäßige Erwärmung des Gehäuses und somit ein gleichmäßiges Aufschmelzen beziehungsweise Schmelzen des Materials erreicht werden. Das Gehäuse kann zudem aus einem Material mit einer hohen Wärmeleitfähigkeit, beispielsweise einem Metall, gefertigt sein, sodass die von der Heizeinrichtung bereitgestellte Wärme effektiv an das Material übertragen werden kann. Zudem kann der Druckkopf ein entsprechendes Bodenelement aufweisen, welches einerseits mit dem Gehäuse und andererseits mit der Düse verbunden ist. Auch dieses Bodenelement kann bevorzugt aus einem Material mit einer hohen Wärmeleitfähigkeit gefertigt sein. Auf diese Weise kann eine Übertragung der Wärme von der Heizeinrichtung an die Düse ermöglicht werden. Damit kann das mit dem Zusatzstoff gemischte und geschmolzene Material als Bahn abgegeben werden.

In einer weiteren Ausführungsform wird das geschmolzene Material und der Zusatzstoff durch Drehen einer Förderschnecke in dem Druckkopf vermischt und gefördert. Die Förderschnecke kann zu dem Gehäuse um die Drehachse drehbar gelagert sein. Insbesondere kann die Förderschnecke als Axialförderschnecke ausgebildet sein. Durch die Förderschnecke kann das geschmolzene Material entlang einer Förderrichtung gefördert werden. Zudem kann erreicht werden, dass das geschmolzene Material und das Zusatzmaterial durch die Drehung der Förderschnecke miteinander vermischt werden. Auf diese Weise kann eine gleichmäßige Mischung des geschmolzenen Materials und des Zusatzstoffs beziehungsweise des Gases erreicht werden.

Zudem kann es vorgesehen sein, dass das geschmolzene Material zusammen mit dem Zusatzstoff durch die Drehung der Förderschnecke mit einem Druck beaufschlagt wird. Dies kann beispielsweise dadurch erreicht werden, dass die Förderschnecke zumindest in einem Längenbereich beziehungsweise entlang einer Förderrichtung einen konischen Verlauf in Förderrichtung aufweist. Zwischen einer Wand des Gehäuses und der Förderschnecke können jeweilige Bereiche ausgebildet sein, in denen das geschmolzene Material angeordnet ist. Durch den konisch Verlauf der Förderschnecke in Förderrichtung reduziert sich entlang der Förderrichtung eine radiale Breite der jeweiligen Bereiche. Auf diese Weise kann das Material bei seiner Förderung besonders vorteilhaft mit dem Druck beaufschlagt werden.

In einer weiteren Ausgestaltung wird das mit dem Zusatzstoff gemischte geschmolzene Material durch Bohrungen in der Förderschnecke zu einem Kanal geführt, welcher in die Düse des Druckkopfs mündet. Die Förderschnecke kann entsprechende Bohrungen aufweisen, welche in die jeweiligen Bereiche zwischen der Förderschnecke und der Gehäusewand münden. Beispielsweise können sich diese Bohrungen im Wesentlichen entlang der radialen Richtung der Förderschnecke erstrecken. Innerhalb der Förderschnecke ist der Kanal vorhanden, welcher in die Düse beziehungsweise eine Austrittsöffnung des Druckkopfs mündet. Der Kanal kann entlang der Drehachse der Förderschnecke beziehungsweise entlang der Förderrichtung verlaufen. Während der Drehung der Förderschnecke wird das geschmolzene Material zusammen mit dem Zusatzstoff durch die Bohrungen in den Kanal gedrückt und zu der Düse beziehungsweise der Austrittsöffnung gefördert.

Bevorzugt wird als das Material ein thermoplastischer Kunststoff verwendet. Bei dem thermoplastischen Kunststoff kann es sich um ein Polyolefin, beispielsweise Polyethylen oder Polypropylen, handeln. Es kann auch vorgesehen sein, dass als der thermoplastische Kunststoff Acrylnitril-Butadien-Styrol (ABS), Polyamide (PA), Polylactat (PLA), Polymethylmethacrylat (PMMA), Polycarbonat (PC), Polyethylenterephthalat (PET), Polyethylen (PE), Polypropylen (PP), Polystyrol (PS), Polyetheretherketon (PEEK) oder Polyvinylchlorid (PVC) verwendet wird.

Eine erfindungsgemäße Druckvorrichtung dient zum dreidimensionalen Aufbringen eines Materials. Die Druckvorrichtung umfasst einen beheizten Druckkopf zum Schmelzen des Materials und zum Ausgeben des geschmolzenen Materials. Darüber hinaus ist der Druckkopf dazu ausgebildet, bei einer Bewegung des Druckkopfs das geschmolzene Material als Strang auf ein zuvor aufgetragenes Material und/oder ein Substrat aufzutragen, wobei das aufgetragene Material aushärtet. Des Weiteren umfasst die Druckvorrichtung eine Einrichtung zum Hinzufügen eines Zusatzstoffs zu dem geschmolzenen Material, wobei der Zusatzstoff bewirkt, dass sich nach dem Auftragen des geschmolzenen Materials ein Gas in dem geschmolzenen Material ausdehnt und das geschmolzene Material vor dem Aushärten aufgeschäumt wird.

Die Druckvorrichtung kann zu dem einen Antrieb aufweisen, mit dem der Druckkopf entlang einer vorbestimmten Verfahrrichtung bewegt werden kann. Auf diese Weise kann das aufgeschäumt Material entlang der Verfahrrichtung aufgetragen werden. Die Anwendbarkeit auf alle möglichen Achssysteme und/oder Maschinenkonfigurationen ist möglich, da der Druckkopf weitestgehend unabhängig von der Maschinenthematik beziehungsweise der Ausgestaltung des Antriebs ist.

Bevorzugt weist der Druckkopf ein Gehäuse auf, wobei das Gehäuse eine Öffnung zum Einbringen des Zusatzstoffs aufweist. Der Druckkopf kann ein Gehäuse aufweisen, welches einen Aufnahmeraum für das Material bildet. Zudem kann das Material in dem Gehäuse geschmolzen werden. Das Gehäuse weise die Öffnung auf, durch welche der Zusatzstoff eingebracht werden kann.

Die mit Bezug auf das erfindungsgemäße Verfahren vorgestellten bevorzugten Ausführungsformen und deren Vorteile gelten entsprechend für erfindungsgemäße Druckvorrichtung.

Weitere Merkmale der Erfindung ergeben sich aus den Ansprüchen, den Figuren und der Figurenbeschreibung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen verwendbar, ohne den Rahmen der Erfindung zu verlassen.

Die Erfindung wird nun anhand von bevorzugten Ausführungsbeispielen sowie unter Bezugnahme auf die beigefügten Zeichnungen näher erläutert. Dabei zeigen:
- FIG 1: eine schematische Darstellung einer Druckvorrichtung zum dreidimensionalen Auftragen eines Materials;
- FIG 2: einen Druckkopf der Druckvorrichtung in einer geschnittenen Seitenansicht; und
- FIG 3: eine geschnittene Seitenansicht eines Druckkopfes gemäß einer weiteren Ausführungsform.

In den Figuren werden gleiche oder funktionsgleiche Elemente mit den gleichen Bezugszeichen versehen.

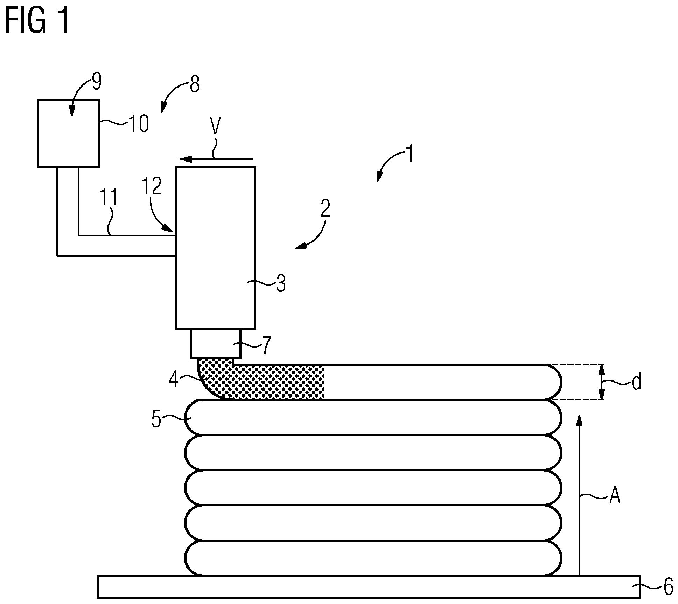

FIG 1 zeigt eine schematische Darstellung eine Druckvorrichtung 1. Mit dieser Druckvorrichtung 1 kann das sogenannte FLM-Verfahren (FLM - fused layer manufacturing/modeling) durchgeführt werden. Die Druckvorrichtung 1 umfasst einen Druckkopf 2, welcher ein beheiztes Gehäuse 3 aufweist. Diesem Druckkopf 2 wird ein Material, beispielsweise in Form eines Filaments, eines Granulats oder Pulvers zugeführt. Mittels des Druckkopfs 2 kann dann das Material erwärmt und geschmolzen werden. Der Druckkopf 2 umfasst eine Düse 7, mittels welcher das geschmolzene Material 4 ausgeben werden kann. Dabei wird das geschmolzene Material 4 als Strang beziehungsweise als Bahn ausgegeben. Das geschmolzene Material 4 wird dabei auf ein zuvor aufgetragenes Material 5 aufgetragen, welches zumindest teilweise erstarrt ist. Zu Beginn des Verfahrens wird das Material auf ein Substrat 6 aufgetragen. Danach werden mehrere Schichten beziehungsweise Bahnen übereinander entlang einer Aufbaurichtung A aufgetragen. Die jeweiligen Bahnen weisen eine Dicke d auf, wobei die Dicke d der jeweiligen Bahnen gleich ist. Der Druckkopf 2 wird mittels eines hier nicht dargestellten Antriebs entlang einer Verfahrrichtung V bewegt.

Darüber hinaus umfasst die Druckvorrichtung 1 eine Einrichtung 8, mittels welcher dem geschmolzenen Material 4 in dem Druckkopf 2 ein Zusatzstoff 9 zugeführt werden kann. Vorliegend befindet sich der Zusatzstoff 9 in einem Behälter 10, welcher über eine Leitung 11 fluidisch mit dem Gehäuse 3 des Druckkopf 2 verbunden ist. Dabei weist das Gehäuse 3 eine entsprechende Öffnung 12 auf, welche mit der Leitung 11 fluidisch verbunden ist. Durch den Zusatzstoff 9, denn das geschmolzene Material 4 eingebracht wird, wird bewirkt, dass sich ein Gas in dem geschmolzenen Material 4 löst. Nach dem Ausgeben des geschmolzenen Materials 4 zusammen mit dem Gas aus der Düse 7 expandiert das Gas in dem geschmolzenen Material 4. Somit ist das Material, welches aus dem Druckkopf 2 beziehungsweise der Düse 7 abgegeben wird, schaumartig beziehungsweise ein Schaum. Nach dem Aushärten des aufgeschäumten Materials weisen die jeweiligen Gasbläschen in dem Material einen Überdruck auf. Auf diese Weise kann die mechanische Stabilität bei gleichzeitigem geringen Gewicht erreicht werden.

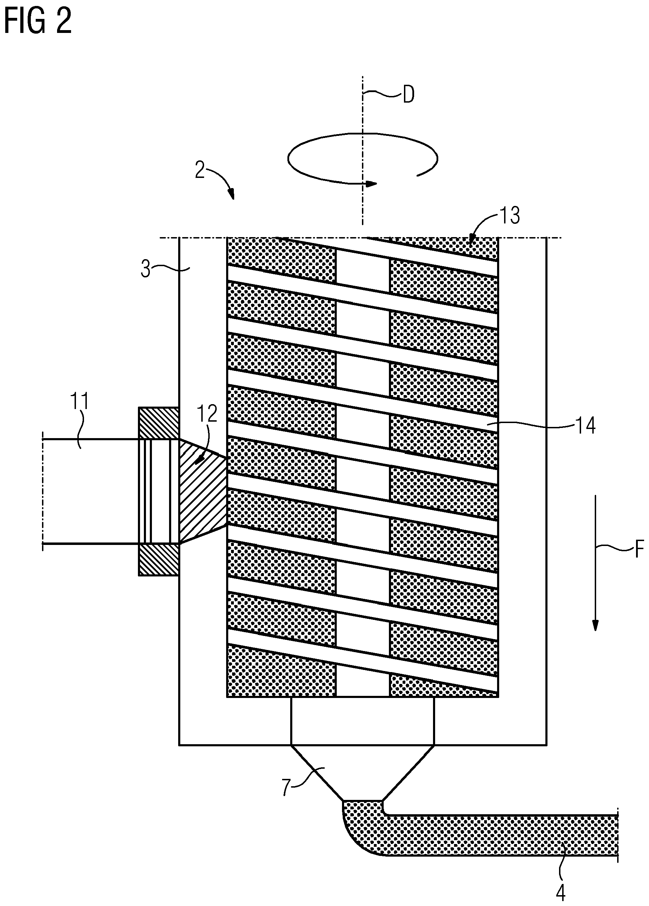

FIG 2 zeigt den Druckkopf 2 gemäß einer ersten Ausführungsform in einer geschnittenen Seitenansicht. Hierbei ist die Öffnung 11 zu erkennen, welche durch das Gehäuse 3 beziehungsweise durch eine Gehäusewand hindurch führt. In dem vorliegenden Beispiel kann als der Zusatzstoff 9 ein Inertgas, beispielsweise Stickstoff, dem geschmolzenen Material 4 zugeführt werden. In dem vorliegenden Beispiel ist das Gehäuse 3 hohlzylinderförmig ausgebildet. Dabei ist die Öffnung 11 an einer Mantelfläche des Gehäuses 3 angeordnet. Darüber hinaus kann das Gehäuse 3 einen entsprechenden, hier nicht dargestellten, Deckel aufweisen, mit dem ein Aufnahmeraum 13 im Inneren des Gehäuses 3 verschlossen werden kann. Vorliegend weist der Druckkopf 2 zudem eine Förderschnecke 14 auf, mittels welcher das geschmolzene Material 4 gefördert werden kann. In dem vorliegenden Beispiel ist die Förderschnecke 14 als Axialförderschnecke ausgebildet. Dabei wird die Förderschnecke 14 um eine Drehachse D gedreht. Dadurch wird das geschmolzene Material 4 entlang einer Förderrichtung F gefördert, sodass das gesamte Material aus der Düse 7 abgegeben werden kann. Durch die Drehung der Förderschnecke 14 kann ferner eine zuverlässige Durchmischung des geschmolzenen Materials 4 mit dem Zusatzstoff 9 beziehungsweise dem Gas erreicht werden.

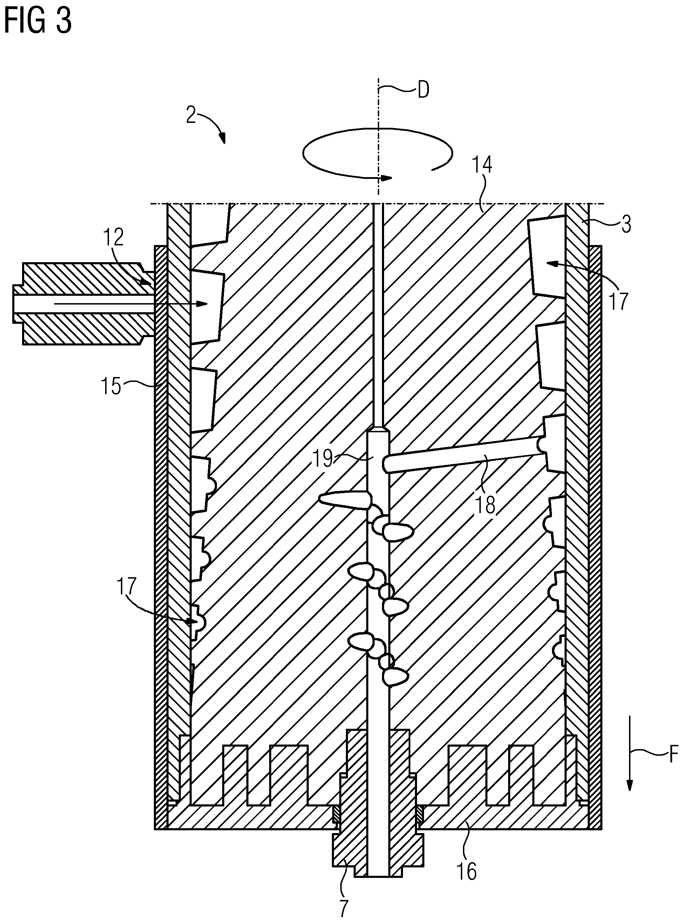

FIG 3 zeigt eine geschnittene Seitenansicht eines Druckkopfs 2 gemäß einer weiteren Ausführungsform. Hier weist der Druckkopf 2 zudem eine Heizeinrichtung 15 auf, mittels welcher das Material geschmolzen werden kann. Dabei ist die Heizeinrichtung 15 an einer Außenseite beziehungsweise der Mantelfläche des Gehäuses 3 angeordnet. Beispielsweise kann die Heizeinrichtung 15 als Heizmanschette ausgebildet sein. Der Druckkopf 2 umfasst ferner ein Bodenelement 16, welches einerseits mit dem Gehäuse 3 und andererseits mit der Düse 7 verbunden ist. Das Bodenelement 16 kann aus einem Material mit einer hohen Wärmeleitfähigkeit, beispielsweise einem Metall, gefertigt sein. Somit kann die Wärme von der Heizeinrichtung 15 an die Düse 7 übertragen werden.

In dem vorliegenden Beispiel ist die Förderschnecke 14 zudem konisch ausgebildet. Zwischen der Förderschnecke 14 und dem Gehäuse 3 beziehungsweise der Innenwand des Gehäuses 3 sind jeweilige Bereiche 17 ausgebildet, in denen sich das geschmolzene Material 4 zusammen mit dem Zusatzstoff 9 beziehungsweise dem Gas befindet. Durch die konische Ausgestaltung der Förderschnecke 14 verringert sich eine radiale Breite der jeweiligen Bereiche 17 entlang der Förderrichtung F. Bei der Drehung der Förderschnecke 14 wird das Material entlang der Förderrichtung F nach unten bewegt und durch die jeweils kleiner werdenden Bereiche 17 mit einem Druck beaufschlagt. Hierdurch kann erreicht werden, dass sich das Gas in dem geschmolzenen Material 4 löst.

Darüber hinaus weist die Förderschnecke 14 eine Mehrzahl von Bohrungen 18 auf, welche fluidisch mit den jeweiligen Bereichen 17 verbunden sind. Darüber hinaus münden die Bohrungen 18 in einen Kanal 19, welcher wiederum fluidisch mit der Düse 7 beziehungsweise einer Austrittsöffnung verbunden ist. Bei der Drehung der Förderschnecke 14 wird mit dem Gas vermischte geschmolzene Material 4 durch die jeweiligen Bohrungen 14 in den Kanal 19 gedrückt. Auf diese Weise kann erreicht werden, dass das mit dem Gas vermischte Material aus der Düse 7 austritt.

## Patentansprüche

1. Verfahren zum dreidimensionalen Aufbringen eines Materials mittels einer Druckvorrichtung (1), bei welchem das Material in einem Druckkopf (2) geschmolzen wird und das geschmolzene Material (4) aus einer Düse (7) ausgeben wird, wobei das geschmolzene Material (4) bei einer Bewegung des Druckkopfs (2) als Strang auf ein zuvor aufgetragenes Material (5) und/oder ein Substrat (6) aufgebracht wird und aushärtet,
**dadurch gekennzeichnet, dass**
dem geschmolzenen Material (4) in dem Druckkopf (2) ein Zusatzstoff (9) hinzugefügt wird, wobei der Zusatzstoff (9) bewirkt, dass sich nach dem Auftragen des geschmolzenen Materials (4) ein Gas in dem geschmolzenen Material (4) ausdehnt und das geschmolzene Material (4) vor dem Aushärten aufgeschäumt wird.

2. Verfahren nach Anspruch 1, **dadurch gekennzeichnet, dass** dem geschmolzenen Material (4) als der Zusatzstoff (9) das Gas hinzugefügt wird.

3. Verfahren nach Anspruch 1, **dadurch gekennzeichnet, dass** dem geschmolzenen Material (4) als der Zusatzstoff (9) ein chemisches Treibmittel hinzugefügt wird, wobei durch das Hinzufügen des chemischen Treibmittels zu dem geschmolzenen Material (4) das Gas erzeugt wird.

4. Verfahren nach einem der vorhergehenden Ansprüche, **dadurch gekennzeichnet, dass** das Material mittels einer Heizeinrichtung (15) des Druckkopfs (2) geschmolzen wird.

5. Verfahren nach einem der vorhergehenden Ansprüche, **dadurch gekennzeichnet, dass** das geschmolzene Material (4) und der Zusatzstoff (9) durch Drehen einer Förderschnecke (14) in dem Druckkopf (2) vermischt und gefördert wird.

6. Verfahren nach Anspruch 5, **dadurch gekennzeichnet, dass** das mit dem Zusatzstoff (9) gemischte, geschmolzene Material (4) durch Bohrungen (18) in der Förderschnecke (14) zu einem Kanal (19) geführt wird, welcher in die Düse (7) des Druckkopfs (2) mündet.

7. Verfahren nach einem der vorhergehenden Ansprüche, **dadurch gekennzeichnet, dass** als das Material ein thermoplastischer Kunststoff verwendet wird.

8. Druckvorrichtung (1) zum dreidimensionalen Aufbringen eines Materials, umfassend
- einen beheizten Druckkopf (2) zum Schmelzen des Materials und zum Ausgeben des geschmolzenen Materials (4),
- wobei der Druckkopf (2) dazu ausgebildet ist, bei einer Bewegung des Druckkopfs (2) das geschmolzene Material (4) als Strang auf ein zuvor aufgetragenes Material (5) und/oder ein Substrat (6) aufzutragen,
**dadurch gekennzeichnet, dass**
die Druckvorrichtung (1) eine Einrichtung (8) zum Hinzufügen eines Zusatzstoffs (9) zu dem geschmolzenen Material (4) aufweist, wobei der Zusatzstoff (9) bewirkt, dass sich nach dem Auftragen des geschmolzenen Materials (4) ein Gas in dem geschmolzenen Material (4) ausdehnt und das geschmolzene Material (4) vor dem Aushärten aufgeschäumt wird.

9. Druckvorrichtung (1) nach Anspruch 8, **dadurch gekennzeichnet, dass** der Druckkopf (2) ein Gehäuse (3) aufweist, wobei das Gehäuse (3) eine Öffnung (12) zum Einbringen des Zusatzstoffs (9) aufweist.
